# EUROPEAN PATENT APPLICATION

(11) **EP 1 659 149 A1**
(43) Date of publication of application: **24.05.2006**
(21) Application number: 04713837.5
(22) Date of filing: 24.02.2004
(51) Int. Cl.: C08L 3/00, C08L 63/06, C08L 63/08

(54) **A FULLY-BIODEGRADABLE PLASTIC MASTERBATCH AND ITS PREPARATION PROCESS**

(30) Priority: 25.02.2003 CN 03105343
(71) Applicant: Ding, Shaozhong, Fujian 350003 (CN)
(72) Inventor: Ding, Shaozhong, Fujian 350003 (CN)
(74) Representative: Danek, Vilem
(86) International application number: PCT/CN2004/000143
(87) International publication number: WO 2004/076550

(57) **Abstract**

The present invention relates to a fully-biodegradable plastic masterbatch and its preparation method. Said fully-biodegradable plastic masterbatch consists of starch, coupling agent, dispersant, polycycloactone, plasticizer, anticoagulant, chemical degradation promoter and co-oxidant. Its preparation method includes steps of: (1) fining and dehydrating starch, (2) mixing, (3) extruding. Said fully-biodegradable plastic masterbatch of the present invention has fully-biodegradability, which can indeed accomplish eliminating “white pollution” and assimilate with environment, at the same time, costs low, and has good substitutability.

## Description

### BACKGROUND OF THE INVENTION

### (a) Field of the Invention

The present invention is related to a biodegradable plastic master batch and its preparation; and more particularly, to a totally biodegradable plastic master batch and its preparation methodology.

### (b) Description of the Prior Art:

There are various degradable plastic batches including optical, optical-oxygen, high-starch containment, and high calcium carbonate optical-oxygen biodegradable plastic batches generally available in the market. However, all those plastic batches contain more or less polyolefin composition including polyethylene, polypropylene, and polyvinyl-chloride (PVC) that prevent incomplete degradation when disposed. Therefore, the problem of resultant "white pollution" has not yet been satisfactorily solved.

Research of documents published in recent years including Introduction of *Polycaprolactone (PCL) Characteristics & its Prospective Applications,* an academic presentation in the Fourth Convention of XingJiang, XingJiang Institute, Chinese Academy of Science (CAS) www.xjb.ac.cn; *Biodegradable Plastics - Study of PHA Production Technology,* Collection of Presentations in the Incorporation of Degradable Plastics Subcommittee, CPPIA, China, November 2001; and *"Microbe Synthetic PHA Polymer Master Batch", Communications of Degradable Plastics,* Vol. 33, Dec. 20, 2002, has revealed that any polycyclic-lactone plastic master batch containing ester (with its structural formula: 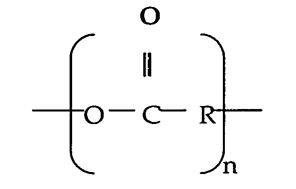 such as PGA (formula: 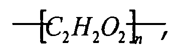 and structural formula, 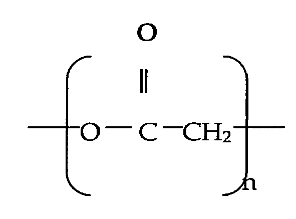 PLA, 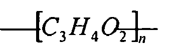 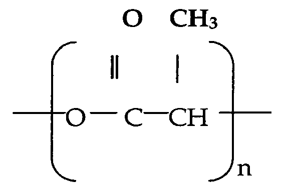 PCL, (formula: 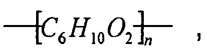 and structural formula, 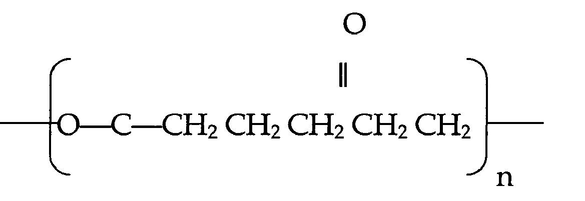 and PHA (structural formula,

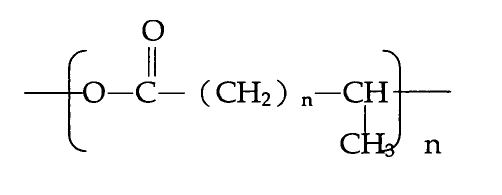

Wherein, n=1, 2, 3, 4; usually n-1 if it refers to β -hydrogen fatty acid esters; M, the extent of polymerization; R, is side-bonds and may be in different groups) can be fast degraded by enzyme secreted by microbes; and the ester radicals on its primary bond can be easily broken into carbon dioxide and water to achieve complete biodegradation. However, those master batches are prevented from significant promotion in the market due to higher unit production cost (as high as US$6.00~8.00/kg) and a nature of resources not readily available.

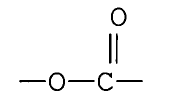

### (Molecular formula of Ester radical)

Starch is a natural polymer, and it is usually found the presences of hydroxyl group and peroxide bonds as shown in the molecular formula below its structural formula also as illustrated below is similar to that of polyester that permits total biodegradation.

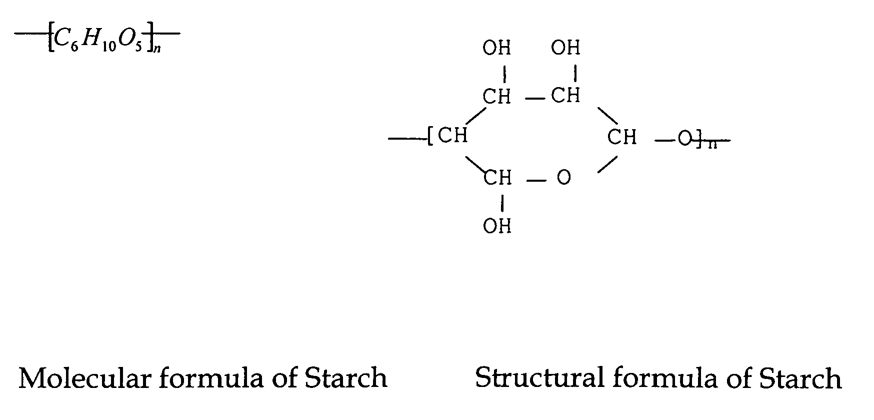

### SUMMARY OF THE INVENTION

The primary purpose of the present invention is to provide a plastic master batch that is at comparatively lower unit production cost and is totally biodegradable and its preparation methodology. The plastic master batch of the present invention can be used for the synthesis into various degradable plastic products.

To achieve the purpose, a totally biodegradable plastic mast batch is comprised of (by weight): 100 parts of starch, 3~12 parts of coupling agents, 5~20 dispersing agents, 30~90 parts of polycyclic-lactone, 12~35 parts of plasticizer, 0.2~1.0 parts of anti-caking agent, 3~18 parts of chemical degradation promoter, and 0.2~2.1 parts of oxidization promoter. Wherein, the coupling agent relates to Titanate or diisocyanate; and the dispersing agent relates to glycerin, corn oil or clean oil. When applied in the preparation of the totally degradable plastic master batch, the polycyclic-lactone relates to the one in its molecular structure that features shorter bond greater rigidity, and higher hardness of the repetition unit (PGA or PLA preferred); the polycyclic-lactone, to the one in a molecular structure that features longer bond, greater resilience, and higher tenacity in the repetition unit (PCL or PHA preferred; as for the latter, butyl β -polycarboxyl group is preferred in its molecular formulas as follows; the plasticizer, to CH-PA or EVA oligomer wax; oxidization promoter, to low temperature heat or unsaturated fatty acid; the promoter of chemical degradation, to carboxylate of transition metal; and anti-caking agent, to sodium silico-aluminate.

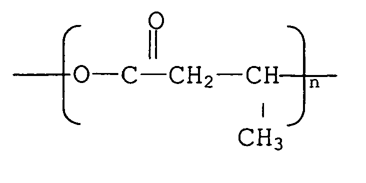

The purpose of adding plasticizer and dispersing agent into the composition of the totally biodegradable plastic master batch of the present invention is to lower the plastication temperature of the polycyclic-lactone for better incorporation with starch through the mixture and refinery process.

In the composition of the totally biodegradable plastic master batch of the present invention, the addition of the coupling agent is a must for modification to seek better binding between the starch and the polycyclic-lactone since there are three hydrophilic groups to the bond of the starch molecule while such hydrophilic groups are present only on the tail of the bond in the molecule of the polycyclic-lactone.

The preparation of the totally biodegradable plastic master batch of the present invention includes the following steps:
1. Refining and dehydration of Starch: starch, water, and anti-caking agent are mixed and blended into a thick solution, the solution is then poured into a disperser machine for 20~30 minutes to grind the starch into that with a grain size of 1-10µm with the refining temperature controlled within the range of 40~60°C, the thick solution of the primary starch is then dehydrated through an ultra-filtration unit; the dehydrated primary starch is further mixed with glycerin or corn oil and blended into thick solution before being poured into the dispersing machine for 40~50 minutes to be refined to that with a grain size less than 1µm at a temperature controlled within the range of 50~70°C, and the secondary starch is then dehydrated through the ultra-filtration unit to reduce its water containment to be less than 0.5% before being placed into a centrifuge to separate the oil from the powder; finally, the resultant starch power and the coupling agent are poured into a high-speed kneader to be kneaded for 20~30 minutes to come out of a modified starch powder 1.
2. Mixing: Polycyclic-lactone, plasticizer, dispersing agent, oxidization promoter, chemical degradation promoter in sequence are added into the modified starch 1 availed from Step 1 is added into the kneader for 20~30 minutes.
3. Molding: the product availed from Step 2 is then placed into a dual-screw, dual-exhaust extrusion granulator to come out the plastic master batch.

Following the molding process as described in Step 3 for the preparation of the totally biodegradable plastic master batch, a packaging step of vacuum sealing may be provided to ensure that the product will not get wetted and deteriorated during the storage and transportation, thus to further ensure of easy process for the final product.

In the course of the preparation of the totally biodegradable engineering plastic master batch, the molding temperature in Step 3 is controlled within the range of 130~160°C (respectively, Unit 1 at 130°C; Unit 2, 135°C; Unit 3, 140°C; Unit 4, 145°C; Unit 5, 150°C; Unit 6, 155 °C ; Unit 7, 160°C, and the head, 155°C); and in the preparation of the totally biodegradable film plastic master batch, the molding temperature in Step 3 is controlled within the range of 80~120°C (respectively, Unit 1 at 80°C; Unit 2, 88°C; Unit 3, 93°C; Unit 4, 98°C; Unit 5, 105°C; Unit 6, 112°C; Unit 7, 118°C; Unit 8, 120 °C, and the head, 115°C).

The grinder dispersing machine referred in Step 1 is the SK80-2A dispersing machine supplied by Kang Shen Machinery Works, Jiangyin; the ultra-filtration unit referred in Step 1, HDZC-006-1 by Blue Cross, Tientjin; the centrifuge referred in Step 1, GKH1250-1 by Tiengong Technology Development, Hofei; the high-speed kneader referred in Step 2, GL500/1600 by Twilight Group, Sundong; and granulator referred in Step 3, TE-95 by KEYA, Najing. The primary reason for the selection of the dual-screw, dual-exhaust granulator is that both of the polycyclic-lactone and the starch in their molecular structures contain massive carboxyl radicals and thus are highly water absorbent; the extrusion by the dual-screw mixer will cause both of the polycyclic-lactone to be well fused and bonded to each other for the formation of n intervened network structure. Furthermore, the dual exhaust of the granulator effectively clear off water containment to avail dry product for facilitating the process for the final product.

The remaining process other than that described in those three steps are mandatory without any special requirements.

In the preparation of the totally biodegradable plastic master batch of the present invention, the starch must be refined due to that the starch generally available in the market is found with a comparatively larger grain size (20~125µm), which is bad for the binding between the starch and the polycyclic-lactone. The reduction of the grain size of the starch down to less than 1µm increases the surface area of the starch available for the binding with the polycyclic-lactone, thus a better binding results between both materials.

In the preparation of the totally biodegradable plastic master master batch of the present invention, the dehydration of the starch is very critical since the starch contains massive hydrophilic groups, and thus a comparatively higher water containment to compromise the molding results.

The primary advantage of totally biodegradable plastic master batch resulted from applying the preparation method of the present invention is that the finished product made from the plastic master batch of the present invention when disposed of can be one hundred and fast degraded by the enzyme secreted by microbes and fully converted into water and carbon dioxide to really realize the "white pollution" by being harmonized with the environment. Whereas the containment of start is comparatively higher in the making of the plastic master batch of the present invention and it is available at cheap price, the production cost per unit of the present invention is comparatively low (approximately at US$1.5), that is 3 to 4 folds of cost reduction when compared to that of the existing polycyclic-lactone plastic master batch. Furthermore, the starch is ever ready, and reclaimable resources in abundance to make the product of the present invention a very ideal substitute.

### DETAILED DESCRIPTION OF THE PREFERRED EMBODIMENTS

In the following preferred embodiments of the present invention, all the compositions are given by weight with each part of 1 kg unless otherwise specified.

### The First Preferred Embodiment

(1) 100 parts of starch, 200 parts of water, and 0.3 parts of anti-caking agent are mixed and blended into a thick solution; the solution is poured into the SK80-2A dispersing machine for 20~30 minutes for the starch to be ground into such in a grain size of 1-10 µ m with the refining temperature controller within the range of 40-60°C; (2) The primary starch solution is put into HDZC-006-1 ultra filtration unit to be dehydrated; (3) The dehydrated starch is further mixed with 100 parts of glycerin or corn oil and blended again into a thick solution before being poured into the same dispersing machine for 40~50 minutes to be ground into such that the starch is of a grain size less than <1µ m with the refining temperature controlled within the range of 50~70°C; (4) The secondary refined starch thick solution is then dehydrated in the ultra filtration unit for the water containment of the starch to drop below 0.5%; (5) the starch after two rounds of dehydration is then placed into the GKH1250-N centrifuge for a proper separation of oil from powder; (6) the starch availed from Step (5) and three parts of the coupling agent are poured into the GL500/1600 high-speed kneader for 20~30 minutes for modification; (7) 30 parts of PGA, 12 parts of plasticizer, 5 parts of dispersing agent, 0.5 parts of oxidization promoter, and 3 parts of chemical degradation promoter are added in sequence into the kneader for 20~30 minutes for the kneading; (8) the product availed from Step (7) is then placed into the dual-screw, dual-exhaust extrusion granulator with the extrusion temperature controlled in the range of 130-160°C (Unit 1 at 130°C; Unit 2, 135°C; Unit 3, 140°C; Unit 4,145°C; Unit 5, 150°C; Unit 6, 155°C; Unit 7, 160°C; and the head, 155°C) ; and the grains are then vacuum sealed for the preparation of the totally biodegradable engineering plastic product.

### The Second Preferred Embodiment

(1) 100 parts of starch, 200 parts of water, and 0.2 parts of anti-caking agent are mixed and blended into a thick solution; the solution is poured into the SK80-2A dispersing machine for 20~30 minutes for the starch to be ground into such in a grain size of 1-10 µ m with the refining temperature controller within the range of 40-60°C; (2) The primary starch solution is put into HDZC-006-1 ultra filtration unit to be dehydrated; (3) The dehydrated starch is further mixed with 100 parts of glycerin or corn oil and blended again into a thick solution before being poured into the same dispersing machine for 40~50 minutes to be ground into such that the starch is of a grain size less than <1µ m with the refining temperature controlled within the range of 50~70 °C; (4) The secondary refined starch thick solution is then dehydrated in the ultra filtration unit for the water containment of the starch to drop below 0.5%; (5) the starch after two rounds of dehydration is then placed into the GKH1250-N centrifuge for a proper separation of oil from powder; (6) the starch availed from Step (5) and four parts of the coupling agent are poured into the GL500/1600 high-speed kneader for 20~30 minutes for modification; (7) 40 parts of PGA, 16 parts of plasticizer, 8 parts of dispersing agent, 0.2 parts of oxidization promoter, and 6 parts of chemical degradation promoter are added in sequence into the kneader for 20~30 minutes for the kneading; (8) the product availed from Step (7) is then placed into the dual-screw, dual-exhaust extrusion granulator with the extrusion temperature controlled in the range of 130-160°C (Unit 1 at 130°C; Unit 2,135°C; Unit 3,140°C; Unit 4,145°C; Unit 5, 150°C; Unit 6, 155°C; Unit 7, 160°C; and the head, 155°C) ; and the grains are then vacuum sealed for the preparation of the totally biodegradable engineering plastic product.

### The Third Preferred Embodiment

(1) 100 parts of starch, 200 parts of water, and 0.9 parts of anti-caking agent are mixed and blended into a thick solution; the solution is poured into the SK80-2A dispersing machine for 20~30 minutes for the starch to be ground into such in a grain size of 1-10 µ m with the refining temperature controller within the range of 40-60°C;(2) The primary starch solution is put into HDZC-006-1 ultra filtration unit to be dehydrated;(3) The dehydrated starch is further mixed with 100 parts of glycerin or corn oil and blended again into a thick solution before being poured into the same dispersing machine for 40~50 minutes to be ground into such that the starch is of a grain size less than <1µ m with the refining temperature controlled within the range of 50~70°C; (4) The secondary refined starch thick solution is then dehydrated in the ultra filtration unit for the water containment of the starch to drop below 0.5%; (5) the starch after two rounds of dehydration is then placed into the GKH1250-N centrifuge for a proper separation of oil from powder; (6) the starch availed from Step (5) and eight parts of the coupling agent are poured into the GL500/1600 high-speed kneader for 20~30 minutes for modification; (7) 50 parts of polycyclic-lactone, 24 parts of plasticizer, 10 parts of dispersing agent, 1.0 parts of oxidization promoter, and 5 parts of chemical degradation promoter are added in sequence into the kneader for 20~30 minutes for the kneading; (8) the product availed from Step (7) is then placed into the dual-screw, dual-exhaust extrusion granulator with the extrusion temperature controlled in the range of 80-120°C (Unit 1 at 80°C; Unit 2, 88°C; Unit 3, 93°C; Unit 4, 98°C; Unit 5, 105°C; Unit 6, 112°C; Unit 7, 118°C; Unit 8, 120°C; and the head, 155°C) ; and the grains are then vacuum sealed for the preparation of the totally biodegradable PVC film.

### The Fourth Preferred Embodiment

(1) 100 parts of starch, 200 parts of water, and 1.0 parts of anti-caking agent are mixed and blended into a thick solution; the solution is poured into the SK80-2A dispersing machine for 20~30 minutes for the starch to be ground into such in a grain size of 1-10 µ m with the refining temperature controller within the range of 40-60°C; (2) The primary starch solution is put into HDZC-006-1 ultra filtration unit to be dehydrated; (3) The dehydrated starch is further mixed with 100 parts of glycerin or corn oil and blended again into a thick solution before being poured into the same dispersing machine for 40~50 minutes to be ground into such that the starch is of a grain size less than <1µ m with the refining temperature controlled within the range of 50~70°C; (4) The secondary refined starch thick solution is then dehydrated in the ultra filtration unit for the water containment of the starch to drop below 0.5%; (5) the starch after two rounds of dehydration is then placed into the GKH1250-N centrifuge for a proper separation of oil from powder; (6) the starch availed from Step (5) and twelve parts of the coupling agent are poured into the GL500/1600 high-speed kneader for 20~30 minutes for modification; (7) 90 parts of β -hydrogen fatty acid esters, 35 parts of plasticizer, 20 parts of dispersing agent, 1.2 parts of oxidization promoter, and 18 parts of chemical degradation promoter are added in sequence into the kneader for 20~30 minutes for the kneading; (8) the product availed from Step (7) is then placed into the dual-screw, dual-exhaust extrusion granulator with the extrusion temperature controlled in the range of 80-120°C (Unit 1 at 80°C; Unit 2, 88°C; Unit 3, 93°C; Unit 4, 98°C; Unit 5,105°C; Unit 6, 112°C; Unit 7, 118°C; Unit 8, 120; and the head, 155°C) ; and the grains are then vacuum sealed for the preparation of the totally biodegradable plastic film.

Test results of the degradation performance of the products are given in the table below.

| Preferred Embodiment | Degradation Efficiency |
|---|---|
| 1 | 86.6 |
| 2 | 86.5 |
| 3 | 88.5 |
| 4 | 93.7 |

The degradation efficiency test is done as specified in ISO 14855 to determine the oxygen demanded biodegradation performance under controllable compost conditions and the structural breakdown performance for the analysis of the volume of CO2 generated. According to ISO14855, a totally degradable fibrin is used as a reference material in the test of the degradation of plastic material; and 45 days after the test, the biodegradation is considered as having totally been degraded when the degradation rate of the reference material is greater than 70%.

The degradation rate of the existing starch-based biodegradable plastic material is comparatively lower. National Trade Standard QB/T2461-1999: Degradable Polyethylene Film for Packaging Purpose provides that the degradation rate must be not less than 20%; and Technical Requirements of Products with Environmental Marking HJBI12-2000: Packaging Products, not less than 15%. Therefore, the plastic master batch of the present invention is totally biodegradable as judged from the data given in the Table above.

## Claims

1. A totally biodegradable plastic master batch is comprised of having 100 parts of starch and 0.2 ~1.0 parts of anti-caking agents refined and dehydrated twice before being kneaded with 3~12 parts of a coupling agent to avail a modified starch; the modified starch being then mixed with 5~20 parts of a dispersing agent; 30~90 parts of polycyclic-lactone, 12-35 parts of a plasticizer, 3~18 parts of a chemical degradation promoter, and 0.2~1.2 parts of an oxidization promoter by weight.

2. The totally biodegradable plastic master batch of Claim 1, wherein the polycyclic-lactone used in the preparation of the totally biodegradable engineering plastic master batch relates to one with its molecular structure featuring shorter bond, greater rigidity, and higher hardness of the repetition unit.

3. The totally biodegradable plastic master batch of Claim 2, wherein, the polycyclic-lactone refers to PGA or PCA.

4. The totally biodegradable plastic master batch of Claim 1, wherein the polycyclic-lactone used in the preparation of the totally biodegradable plastic film master batch relates to one with its molecular structure featuring longer bond, greater resilience, and higher tenacity of the repetition unit.

5. The totally biodegradable plastic master batch of Claim 4, wherein the polycyclic-lactone relates to a PGA or PLA.

6. The totally biodegradable plastic master batch of Claim 5, wherein the PHA is related to Butyl β - polycarboxyl group.

7. The totally biodegradable plastic master batch of Claim 3, wherein 100 parts of the starch, 3~4 parts of the coupling agent, 30~40 parts of the dispersing agent, 30~40 parts of PCA or PGA, 12 parts of the plasticizer, 0.2~0.3 parts of the anti-caking agent; 3~6 parts of the chemical degradation promoter; and 0.2~0.5 parts of the oxidization promoter by weight are used.

8. The totally biodegradable plastic master batch of Claim 5 or 6, wherein 100 parts of the starch, 8~12 parts of the coupling agent, 10~20 parts of the dispersing agent, 50~90 parts of PHA or Butyl β - polycarboxyl group, 24~35 parts of the plasticizer, 0.9~1.0 parts of the anti-caking agent; 5~18 parts of the chemical degradation promoter; and 1.0~1.2 parts of the oxidization promoter by weight are used.

9. A methodology for the preparation of a totally biodegradable plastic master batch is comprised of the following steps:
(1) Refining and dehydration of Starch: (a) starch, water, and anti-caking agent are mixed and blended into a thick solution, the solution is then poured into a disperser machine for 20~30 minutes to grind the starch into that with a grain size of 1-10µm with the refining temperature controlled within the range of 40~60°C, the thick solution of the primary starch is then dehydrated through an ultra-filtration unit; (b) the dehydrated primary starch is further mixed with glycerin or corn oil and blended into thick solution before being poured into the dispersing machine for 40~50 minutes to be refined to that with a grain size less than 1µm at a temperature controlled within the range of 50~70°C, and the secondary starch is then dehydrated through the ultra-filtration unit to reduce its water containment to be less than 0.5% before being placed into a centrifuge to separate the oil from the powder; and (c) finally, the resultant starch power availed from (b) and the coupling agent are poured into a high-speed kneader to be kneaded for 20~30 minutes to come out of a modified starch powder 1;
(2) Mixing - Polycyclic-lactone, plasticizer, dispersing agent, oxidization promoter, chemical degradation promoter in sequence are added into the modified starch 1 availed from Step 1 is added into the kneader for 20~30 minutes; and
(3) Molding: the product availed from Step 2 is then placed into a dual-screw, dual-exhaust extrusion granulator to come out the plastic master batch.

10. The methodology for the preparation of a totally biodegradable plastic master batch of Claim 9, wherein a further step of packaging by vacuum sealing is provided upon the completion of Step (3).

11. The methodology for the preparation of a totally biodegradable plastic master batch of Claim 9, wherein the molding temperature in Step (3) is controlled within the range of 130-160 °C in the preparation of the totally biodegradable engineering plastic mater batch.130-160°C.

12. The methodology for the preparation of a totally biodegradable plastic master batch of Claim 9, wherein the molding temperature in Step (3) is controlled within the range of 80~120°C in the preparation of the totally biodegradable plastic film mater batch.
